# EUROPÄISCHE PATENTANMELDUNG

(11) **EP 4 005 963 A1**
(43) Veröffentlichungstag der Anmeldung: **01.06.2022**
(21) Anmeldenummer: 20210701.7
(22) Anmeldetag: 30.11.2020
(51) Int. Cl.: B66B 31/00, B62B 5/00

(54) **FAHRAUFNAHMEVORRICHTUNG FÜR INSTALLATIONSARBEITEN**

(71) Anmelder: Inventio AG, 6052 Hergiswil (CH)
(72) Erfinder: Bauer, Wolfgang, 7222 Rohrbach (AT); Haider, Michael, 7033 Pöttsching (AT); Neszmerak, Wolfgang, 1120 Wien (AT); Praxmarer, Dominik, 1110 Wien (AT)
(74) Vertreter: Inventio AG

(57) **Zusammenfassung**

Die Erfindung betrifft eine Fahraufnahmevorrichtung (1), die zwecks Installationsarbeiten temporär an ein Tragwerk (71) oder einen Tragwerkabschnitt eines Fahrsteiges oder einer Fahrtreppe montierbar ist. Die Fahraufnahmevorrichtung (1) umfasst zumindest eine Fahrrolle (31) eine Lastaufnahme (21) und eine Anschlagfläche (41). Die Fahrrolle (31) ist zu einer der Anschlagfläche (41) abgewandten Seite hin und von der Anschlagfläche (41) beabstandet, angeordnet. Die Lastaufnahme (21) erstreckt sich von der Anschlagfläche (41) ausgehend, sowie von der Fahrrolle (31) weg. Die Lastaufnahme (21) weist zumindest eine Aufnahmefläche (23) auf, welche zur Abstützung von parallel zur Anschlagfläche (41) auf die Lastaufnahme (21) einwirkende Gewichtskräfte (F_{G}) vorgesehen ist.

## Beschreibung

Die Erfindung betrifft eine Fahraufnahmevorrichtung, die an einem Einbauort zwecks Installationsarbeiten temporär an ein Tragwerk oder einen Tragwerkabschnitt eines Fahrsteiges oder einer Fahrtreppe montierbar ist.

Fahrtreppen und Fahrsteige sind sperrige und schwere Personentransportanlagen, deren Installation, insbesondere deren Einbringung in ein Bauwerk erhebliche Probleme mit sich bringen kann. Um die Schwierigkeiten zu reduzieren, schlägt beispielsweise die JP 2010000988 A vor, eine Fahrtreppe in Sektionen unterteilt, in das Bauwerk einzubringen. Jede Sektion weist hierbei einen Tragwerkabschnitt auf und kann noch weitere Bauteile wie beispielsweise einen Transportbandabschnitt, Führungsschienenabschnitte, Balustraden-Abschnitte und dergleichen mehr, aufweisen. Zudem werden als Fahraufnahmevorrichtungen Rollschemel vorgeschlagen, welche unter jeder einzubringenden Sektion angeordnet werden können.

Zwar können die einzelnen Sektionen hierdurch bequem über ebene Böden gerollt und an ihren Einbauort geschoben werden. Nachteilig ist aber, dass ein grosses Hebewerkzeug wie zum Beispiel der in der EP 2 209 731 B1 offenbarte Portalkran erforderlich ist, um eine Sektion oder die ganze Fahrtreppe beispielsweise am Entladeort vor dem Bauwerk auf die Rollschemel zu heben und nachher am Einbauort wieder von den Rollschemel herunterzuheben. Zudem weisen solche Rollschemel ein erhebliches Eigengewicht auf, so dass empfindliche Böden wie beispielsweise Keramik- oder Steinplattenböden der Bauwerke durch das hohe Gesamtgewicht von beladenen Rollschemel beschädigt werden können. Ein weiteres Problem ist, dass die Rollschemel aufgrund ihrer eigenen Sperrigkeit vom Montagepersonal nicht besonders geschätzt werden, da sie im Monteuren- Fahrzeug sehr viel Raum einnehmen.

Aufgabe der vorliegenden Erfindung ist daher, eine Fahraufnahmevorrichtung bereitzustellen, die möglichst kompakt ist und ein geringes Eigengewicht aufweist, die einfach in der Handhabung ist und insbesondere auch weniger kostet.

Diese Aufgabe wird gelöst durch eine Fahraufhahmevorrichtung, die zwecks Installationsarbeiten temporär an ein Tragwerk oder einen Tragwerkabschnitt eines Fahrsteiges oder einer Fahrtreppe montierbar ist. Die Fahraufnahmevorrichtung weist zumindest eine Fahrrolle und eine Lastaufnahme auf. Zudem weist die Fahraufnahmevorrichtung eine Anschlagfläche auf, welche in einer Bezugsebene angeordnet ist. Die Fahrrolle ist zu einer der Anschlagfläche abgewandten Seite und von der Anschlagfläche beabstandet angeordnet, wobei eine Drehachse der Fahrrolle in einer orthogonal zur Bezugsebene sich erstreckenden Achsenebene angeordnet ist. Des Weiteren ist die Lastaufnahme von der die Anschlagfläche enthaltenden Seite der Bezugsebene ausgehend, sowie von der Fahrrolle sich weg erstreckend, ausgebildet. Die Lastaufnahme weist zumindest eine Aufnahmefläche auf, welche zur Abstützung von parallel zur Bezugsebene und orthogonal zur Achsenebene auf die Lastaufnahme einwirkende Gewichtskräfte vorgesehen ist.

Durch diese Ausgestaltung wird eine Fahraufnahmevorrichtung geschaffen, die auf einfachste Weise an ein Tragwerk oder einen Tragwerkabschnitt einer Fahrtreppe oder eines Fahrsteiges angeordnet, und nach Beendigung der Installationsarbeiten wieder entfernt werden kann. Nachfolgend wird der besseren Übersicht wegen nur noch der Begriff «Tragwerk» verwendet, obwohl hier gleichermassen auch ein Tragwerkabschnitt gemeint ist.

Die Fahraufnahmevorrichtung kann bevorzugt seitlich am Tragwerk angeordnet werden, wobei zumindest ein Teil der Gewichtskraft des Tragwerks auf der Aufnahmefläche der Lastaufnahme abgestützt wird. Da die Laufrolle gemäss obenstehender Definition nicht unterhalb der Lastaufnahme, sondern von dieser beabstandet angeordnet ist, wird durch die Gewichtskraft des Tragwerks an der Fahraufnahmevorrichtung ein Drehmoment erzeugt, welches die Anschlagfläche gegen das Tragwerk drückt. Mit anderen Worten wird das Drehmoment durch die Anschlagfläche abgestützt. Die hierin wirkende Abstützkraft erzeugt eine entgegengesetzte Reaktionskraft, die zwischen der Aufnahmefläche und dem dort aufliegenden Tragwerk wirkt und beispielsweise durch Reibungskräfte abgestützt wird.

Allerdings können diese Reibungskräfte aufgrund des Abstandes der Fahrrolle von der Anschlagfläche (ausserhalb des Reibungskegels) und/oder während des Fahrens durch zusätzlich einwirkende statische und dynamische Kräfte auch zu gering sein, so dass bevorzugterweise die Lastaufnahme zumindest ein der Aufnahmefläche anschliessender, von der Anschlagfläche beabstandeter Vorsprung aufweist. Der Vorsprung ist hierbei zur formschlüssigen Abstützung von orthogonal zur Bezugsebene auf die Lastaufnahme einwirkende Kräfte wie beispielsweise die vorangehend beschriebene Reaktionskraft und die in gleicher Richtung wirkenden, dynamischen Kräfte vorgesehen.

Der Vorsprung kann verschieden ausgestaltet sein. Beispielsweise kann er eine Gegenfläche aufweisen, deren Abstand in Bezug auf die Anschlagfläche fest vorgegeben ist. Diese ist allerdings nur bei Tragwerken verwendbar, deren Untergurt eine zwischen den Vorsprung und die Anschlagfläche passende Kontur, beispielsweise eine Blechkante oder Profilkante eines Walzprofiles aufweist.

In einer alternativen Ausgestaltung kann der Vorsprung eine Gegenfläche aufweisen, deren Abstand in Bezug auf die Anschlagfläche auf eine Breite oder Stärke eines Walzprofils oder auf eine Blechstärke einstellbar ist. Somit ist eine solche Fahraufnahmevorrichtung auch bei unterschiedlich dimensionierten Tragwerken verwendbar. Gegebenenfalls kann dieser Abstand mit auswechselbaren Schablonen angepasst werden, hierbei wäre auch die Kontur der Auflagefläche variierbar, so dass Untergurte, die beispielsweise aus einem Profilrohr oder Rundrohr gefertigt wurden, einen sicheren Halt in der Lastaufnahme finden. Auch eine auf der Auflagefläche angeordnete, weichelastische Unterlage kann eine Art Schablone bilden und dem aufliegenden Obergurt oder Untergurt eines Tragwerkes auch orthogonal zur Richtung der Gewichtskraft, einen sicheren Halt in der Lastaufnahme geben.

In einer weiteren alternativen Ausgestaltung kann der Vorsprung abgestuft ausgebildet sein. Durch diese Abstufung ist die Aufnahmefläche in mehrere Teilflächen unterteilt. Dadurch sind auch mehrere Gegenflächen mit vordefinierten Abständen in Bezug auf die Anschlagfläche vorhanden. Hierdurch sind keine Einstellarbeiten an der Lastaufnahme erforderlich, wenn die Fahraufnahmevorrichtung bei verschiedenen Bautypen von Tragwerken mit unterschiedlichen Konturen von Untergurten verwendet werden sollen.

In einer weiteren Ausgestaltung der Erfindung kann die Fahraufnahmevorrichtung eine Klemmvorrichtung aufweisen, die im Bereich der Lastaufnahme angeordnet ist und deren Klemmkraft im Wesentlichen gegen die Aufnahmefläche wirkend, aufbringbar ist.

Hierdurch kann ein unerwünschtes Verrutschen der Fahraufnahmevorrichtungrelativ zum Tragwerk verhindert werden.

Um das Verrutschen der Fahraufnahmevorrichtungweiter zu verhindern, kann alternativ oder in Ergänzung dazu, kann die Fahraufnahmevorrichtung auch eine Klemmvorrichtung aufweisen, die im Bereich der Anschlagfläche angeordnet ist und deren Klemmkraft im Wesentlichen gegen die Anschlagfläche wirkend, aufbringbar ist.

Um die Beweglichkeit eines mit Fahraufnahmevorrichtungen ausgerüsteten Tragwerkes zu erhöhen, kann die Fahrrolle der Fahraufnahmevorrichtung mittels eines Schwenklagers mit den übrigen Komponenten der Fahraufnahmevorrichtungverbunden sein. Die Schwenkachse des Schwenklagers ist hierbei orthogonal zur Achsenebene und parallel zur Bezugsebene angeordnet. Mit anderen Worten kann die Drehachse der Fahrrolle innerhalb der Achsenebene frei verschwenkt werden.

In einer weiteren Ausgestaltung der Erfindung kann die Fahraufnahmevorrichtungeine Arretier-Vorrichtung zur Arretierung der Drehbewegung der Fahrrolle aufweisen. Dies ist insbesondere dann vorteilhaft, wenn ein mit Fahraufnahmevorrichtungen versehenes Tragwerk auf abschüssigen Böden parkiert werden muss.

Um schlagempfindliche Oberflächen von Böden zu schonen, kann in einer weiteren Ausgestaltung der Erfindung die Fahrrolle aus schlagdämpfendem Material gefertigt sein, oder eine Bandage oder einen Reifen aus schlagdämpfendem Material aufweisen. Das schlagdämpfende Material kann ein Polymerwerkstoff wie Polyvinylchlorid, Polyamid, Polypropylen, Polyurethan und dergleichen mehr sein oder enthalten. Auch Faserverbundwerkstoffe oder Naturwerkstoffe wie Holz, Kautschuk und dergleichen mehr, sind einsetzbar.

Die Fahraufnahmevorrichtung kann einen Grundkörper und eine Konsole aufweisen. Am Grundkörper sind vorzugsweise die mindestens eine Anschlagfläche und die mindestens eine Lastaufnahme ausgebildet. An der Konsole ist die Fahrrolle angeordnet. Der Grundkörper und die Konsole, die als separate Bauteile ausgestaltet sind, sind bei einer fertig montierten Fahraufnahmevorrichtungmiteinander verbunden.

Die Aufteilung in eine Konsole und einen Grundkörper ermöglicht nicht nur ein einfacheres Herstellen der Fahraufnahmevorrichtung, sondern auch eine Einstellbarkeit zwischen der Fahrrolle und der Lastaufnahme. Präziser ausgedrückt, kann hierdurch eine Höhenverstellung geschaffen werden. Um dies zu erreichen, ist die Konsole vorzugsweise mit dem Grundkörper mittels einer blockierbaren Linearführung verbunden. Am einfachsten und kostengünstigsten lässt sich dies mittels Schrauben und Langlöchern erreichen, da nach der Einstellung der gewünschten Höhe durch das Anziehen der Schrauben ein Kraftschluss zwischen einer Oberfläche des Grundkörpers und der daran anliegenden Oberfläche der Konsole erwirkt wird.

In einer Ausführung dieser Höhenverstellung kann zwischen der Konsole und dem Grundkörper ein Spindeltrieb zum Einstellen des Verschiebeweges der Linearführung, beziehungsweise der gewünschten Höhe, beziehungsweise des gewünschten Abstandes zwischen der Auflagefläche und der Rollenachse vorhanden sein. Dieser Spindeltrieb hat auch den Vorteil, dass ein am Boden oder auf Unterlageblöcken liegendes Tragwerk mit der Fahraufnahmevorrichtungen versehen, und anschliessend durch die Betätigung der Spindeltriebe das Tragwerk angehoben werden kann. Nach dem Blockieren der Linearführungen lässt sich das Tragwerk auf den Fahrrollen lastend, ohne grossen Kraftaufwand und ohne zusätzliches, schweres Gerät, verschieben. Nach dem Verschieben können die Linearführungen wieder mobilisiert und das Tragwerk durch Betätigen der Spindeltriebe wieder abgesenkt werden.

Wie bereits weiter oben beschrieben, wird die Fahraufnahmevorrichtung für die Installationsarbeiten vorzugsweise seitlich am Tragwerk angeordnet. Um jedoch zu einer einfach fahrbaren Einheit zu gelangen, werden an einem Tragwerk eines Fahrsteiges oder einer Fahrtreppe mindestens zwei Fahraufnahmevorrichtungen angeordnet, wobei von zwei Fahraufnahmevorrichtungen jeweils die eine Fahraufnahmevorrichtung der anderen Fahraufnahmevorrichtung gegenüberliegend an Seiten des Tragwerkes angeordnet sind. Mit anderen Worten bilden die beiden Fahraufnahmevorrichtungen zusammen mit dem Tragwerk ein Rollschemel- ähnliches Gebilde, wobei das Tragwerk die verbindende, tragende Funktion zwischen den beiden Fahraufnahmevorrichtungen übernimmt.

Wenn die beiden Fahraufnahmevorrichtungen unterhalb des Schwerpunktes des Tragwerks angeordnet sind, reichen zwei Fahraufnahmevorrichtungen aus. In diesem Falle kann eines der beiden Enden des Tragwerkes von Hand angehoben, und diese fahrbare Einheit verschoben werden. Vorzugsweise werden aber zwei voneinander ausreichend beabstandete Paare von Fahraufnahmevorrichtungen am Tragwerk angeordnet, um die hohe Gewichtskraft besser verteilt gegen den Boden des Bauwerkes abzustützen und eine hinsichtlich ihrer Fahreigenschaften bessere, fahrbare Einheit zu schaffen. Selbstverständlich können noch weitere Paare von Fahraufnahmevorrichtungen zwischen diesen beiden Paaren angeordnet werden, wenn der auf eine einzelne Fahraufnahmevorrichtung einwirkende Gewichtskraft-Anteil deren zulässige Traglast übersteigt. Gegebenenfalls ist die Anzahl anzubringender Fahraufnahmevorrichtungen auch abhängig von der maximal zulässigen Kraft, die eine Fahrrolle auf den Boden des Bauwerkes aufbringen darf, um diesen nicht zu zerstören.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind. Dabei zeigen:
- Figur 1: eine dreidimensionale Ansicht einer Fahraufnahmevorrichtung mit einer Lastaufnahme, einer Fahrrolle und eine Anschlagfläche;
- Figur 2: eine dreidimensionale Ansicht eines Tragwerkes mit vier Fahraufhahmevorrichtungen, die paarweise am Tragwerk angeordnet sind; und
- Figur 3: eine Seitenansicht der Fahraufnahmevorrichtungmit einem abgestuften Vorsprung und mit Klemmvorrichtungen.

Die Figuren sind lediglich schematisch und nicht maßstabsgetreu. Gleiche Bezugszeichen bezeichnen in den verschiedenen Figuren gleiche oder gleichwirkende Merkmale.

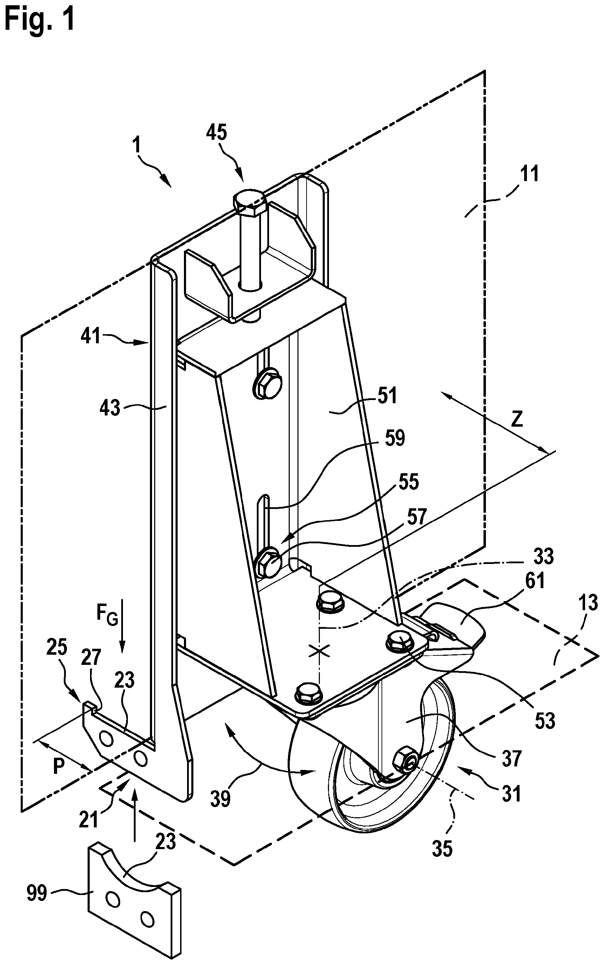

Figur 1 zeigt eine dreidimensionale Ansicht einer Fahraufnahmevorrichtung 1 mit einer Lastaufnahme 21, mit einer Fahrrolle 31 und mit einer Anschlagfläche 41. Zum besseren Verständnis der Erfindung ist die Anschlagfläche 41 in einer mit strichdoppelpunktierter Linie dargestellten Bezugsebene 11 angeordnet, von der alle Richtungsangaben bezüglich der räumlichen Anordnung der weiteren Komponenten und Merkmale der Fahraufnahmevorrichtunglausgehen.

Die Fahrrolle 31 ist von der Anschlagfläche 41 in einem Abstand Z zu einer der Anschlagfläche 41 abgewandten Seite hin, angeordnet. Der besseren Übersicht wegen ist der Abstand Z zwischen der Bezugsfläche 11 und einer Schwenkachse 33 der Fahrrolle 31 eingetragen. Die Fahrrolle 31 weist zudem eine Drehachse 35 auf, welche in einer orthogonal zur Bezugsebene 11 sich erstreckenden Achsenebene 13 angeordnet ist. Die Achsenebene 13 ist mittels unterbrochener Linie symbolisch dargestellt.

Aus der Figur 1 ist daher ersichtlich, dass die Fahrrolle 31 mittels eines Schwenklagers 37 mit den übrigen Komponenten der Fahraufnahmevorrichtung 1 verbunden ist, wobei die Schwenkachse 33 des Schwenklagers 37 orthogonal zur Achsenebene 13 und parallel zur Bezugsebene 11 angeordnet ist. Dadurch kann die Fahrrolle 31, beziehungsweise deren Drehachse 35 innerhalb der Achsenebene 13 beispielsweise um 360° verschwenkt werden, wie dies durch den Doppelpfeil 39 angedeutet wird.

Die tragenden Komponenten der Fahraufnahmevorrichtung 1 sind hauptsächlich ein Grundkörper 43 und eine Konsole 51. An der Konsole 51 ist mittels Schrauben 53 die Fahrrolle 31 beziehungsweise deren Schwenklager 37 befestigt. Am Grundkörper 43 ist die Anschlagfläche 41 und die Lastaufnahme 21 ausgebildet. Die Konsole 51 und der Grundkörper 43 sind im vorliegenden Ausführungsbeispiel in Blechtechnik ausgeführt, wobei verschiedene, mittels Laserausbrenntechnik ausgeschnittene und gegebenenfalls mit Abbiegungen beziehungsweise Abkantungen versehene Blechteile, zusammengeschweisst sind. Selbstverständlich können die Konsole 51 und/oder der Grundkörper 43 auch in Gusstechnik ausgeführt sein.

Die Lastaufnahme 21 erstreckt sich ausgehend von der die Anschlagfläche 41 enthaltenden Seite der Bezugsebene 11, von der Fahrrolle 31 weg. Die Lastaufnahme 21 weist zumindest eine Aufnahmefläche 23 auf, die zur Abstützung von parallel zur Bezugsebene 11 und orthogonal zur Achsenebene 13 auf die Lastaufnahme 21 einwirkende Gewichtskräfte F_{G} vorgesehen ist. Im vorliegenden Beispiel ist die Lastaufnahme 21 hakenförmig ausgebildet, wobei zwei solche Lastaufnahmen 21 (eine ist durch den Grundkörper 43 und die Konsole 51 verdeckt) am Grundkörper 43 angeformt sind.

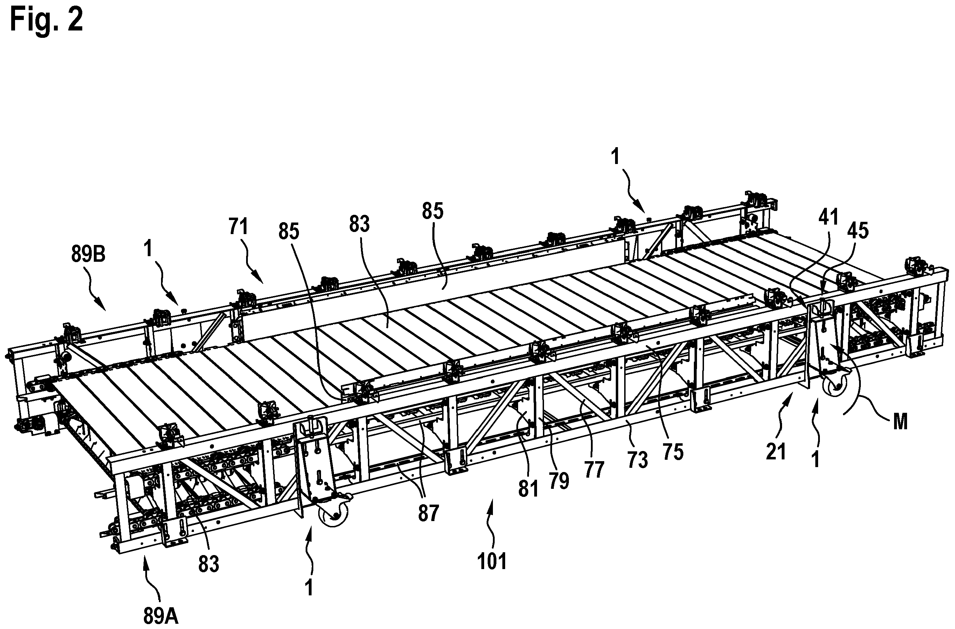

Die hakenförmige Ausgestaltung der Lastaufnahme 21 wird mittels eines Vorsprungs 25 erreicht, welcher der Aufnahmefläche 23 anschliesst. Der Vorsprung 25 ist zur Abstützung von orthogonal zur Bezugsebene 11 auf die Lastaufnahme 21 einwirkende Kräfte vorgesehen. Diese werden einerseits durch ein Drehmoment M erzeugt, welches durch die auf die Lastaufnahme 21 wirkende Gewichtskraft F_{G} verursacht wird und andererseits durch dynamische Kräfte, die während eines Verschiebens einer fahrbaren Einheit 101 (siehe Figur 2) auf die Lastaufnahme 21 einwirken. Zur Aufnahme dieser Kräfte weist der Vorsprung 25 eine Gegenfläche 27 auf, deren Abstand P zur Anschlagfläche 41, auf eine Breite oder Stärke eines Walzprofils oder auf eine Blechstärke abgestimmt ist. Selbstverständlich könnte der Vorsprung 25 auch verschiebbar und arretierbar an der Lastaufnahme 21 angeordnet werden und damit auf die in der Lastaufnahme 21 abstützende Kontur eines Tragwerkes einstellbar sein. Ferner ist es auch möglich den Abstand P mit auswechselbaren Schablonen 99 anzupassen. Die Schablonen 99 können beispielsweise mittels Schrauben an den Lastaufnahmebereichen 21 befestigt werden. Dies eröffnet auch die Möglichkeit, die Kontur der Auflagefläche 23 bedarfsgerecht auf den Untergurt des Tragwerkes 71 abzustimmen, so dass dessen Untergurte, die beispielsweise aus einem Profilrohr oder Rundrohr gefertigt wurden, einen sicheren Halt in der Lastaufnahme 21 finden.

Die Figur 2 zeigt eine dreidimensionale Ansicht eines Tragwerkes 71 mit vier daran angeordneten Fahraufnahmevorrichtungen 1, wobei sie zwei Fahraufnahmevorrichtungen- Paare bilden und wobei die vier Fahraufnahmevorrichtungen 1 zusammen mit dem Tragwerk 71 eine fahrbare Einheit 101 bilden. Das Tragwerk 71 ist genaugenommen ein Tragwerkabschnitt eines Fahrsteiges und weist zu beiden Seiten jeweils einen Obergurt 75 und einen Untergurt 73 auf. Die Obergurte 75 und Untergurte 73 sind mittels Diagonalstreben 77 und Stehern 79 zu Seitenteilen 89A, 89B zusammengefügt. Die beiden Seitenteile 89A, 89B sind durch Querstreben 81 miteinander verbunden. Innerhalb des Tragwerkes 71 sind Führungsschienen 87 montiert sowie ein Transportbandabschnitt 83 des Vorlaufes und eine Transportabschnitt 83 des Rücklaufes angeordnet. Seitlich dieser Transportbandabschnitte 83 sind Sockelbleche 85 am Tragwerk 71 befestigt.

Selbstverständlich kann auch ein Tragwerk 71 mit Fahraufnahmevorrichtungen 1 ausgerüstet werden, welches die vorgenannten, zusätzlichen Komponenten des Fahrsteiges nicht aufweist. Wie problemlos erkennbar ist, sind die Fahraufnahmevorrichtungen 1 jeweils paarweise an einander gegenüberliegenden Seiten des Tragwerks 71 angeordnet. Mit anderen Worten ist jeweils eine der Fahraufnahmevorrichtungen 1 eines Paares der anderen Fahraufnahmevorrichtung 1 gegenüberliegend, an der Seite des Tragwerkes 71 angeordnet. Nachfolgend werden die beiden Figuren 1 und 2 gemeinsam beschrieben.

Die Fahraufnahmevorrichtungen 1 können auf einfachste Weise am Tragwerk 71 angeordnet werden, indem deren Lastaufnahme 21 am Untergurt 73 angesetzt wird. In Position gehalten wird die Fahraufnahmevorrichtung 1 durch die auf die Lastaufnahme 21 wirkende Gewichtskraft F_{G} des Tragwerkes 71 und die aufgrund der Gewichtskraft F_{G} und der vorhandenen Hebelverhältnisse zwischen Lastaufnahme 21, Fahrrolle 31 und Anschlagfläche 41 gegen den Obergurt 75 gepresste Anschlagfläche 41.

Wie aus der Figur 1 erkennbar ist, weist die Fahraufnahmevorrichtung 1 auch eine Arretier-Vorrichtung 61 auf. Durch die Arretier-Vorrichtung 61 lässt sich die Fahrrolle 31 bremsen oder sogar festsetzen, so dass ein mit Fahraufnahmevorrichtungen 1 ausgestattetes Tragwerk 71 (siehe Figur 2) auf Böden des Bauwerkes mit Gefälle nicht unkontrolliert davon rollen kann.

Um die Böden zu schonen, auf denen die Fahraufnahmevorrichtungen 1 mit dem daran montierten Tragwerk 71 rollen, ist die Fahrrolle 31 zum Beispiel aus schlagdämpfendem Material wie beispielsweise aus einem Polymerwerkstoff gefertigt. Selbstverständlich kann die Fahrrolle 31 auch aus einem vergleichsweise harten Werkstoff wie beispielsweise Stahl gefertigt sein und eine Bandage oder einen Reifen aus schlagdämpfendem Material aufweisen.

Die Aufteilung in eine Konsole 51 und in einen Grundkörper 43 ermöglicht einerseits ein einfacheres Herstellen der Fahraufnahmevorrichtung 1 und andererseits den Einbau einer Höhenverstellung zwischen der Lastaufnahme 21 und der Fahrrolle 31. Um dies zu erreichen, ist die Konsole 51 mit dem Grundkörper 43 mittels einer blockierbaren Linearführung 55 verbunden. Wie in der Figur 1 dargestellt, erfolgt dies mittels mehrerer Anordnungen von Schrauben 57 und Langlöchern 59, so dass nach der Einstellung der gewünschten Höhe durch das Anziehen der Schrauben 57 ein Kraftschluss zwischen dadurch gegeneinander gepresste Oberflächen des Grundkörpers 43 und der Konsole 51 erwirkt wird. Selbstverständlich gibt es viele weitere Ausgestaltungen von Linearführungen 55, die an dieser Stelle verwendet werden könnten.

Zwischen der Konsole 51 und dem Grundkörper 43 ist ein Spindeltrieb 45 zum Einstellen des Verschiebeweges S der Linearführung 55, beziehungsweise der gewünschten Höhe, beziehungsweise des gewünschten Abstandes zwischen der Auflagefläche 23 und der Rollenachse 35 vorhanden. Dieser Spindeltrieb 45 hat auch den Vorteil, dass an einem am Boden oder auf Unterlageblöcken liegendes Tragwerk 71 die Fahraufnahmevorrichtungen 1 bequem angeordnet werden können, ohne dass dabei die Fahrrolle 31 den Boden berührt. Durch anschliessendes Betätigen der Spindeltriebe 45 kann das auf den Lastaufnahmen 21 aufliegende Tragwerk 71 von den Unterlageblöcken oder vom Boden angehoben werden. Nach dem Blockieren der Linearführungen 55 durch das Anziehen der Schrauben 57, lässt sich das Tragwerk 71 auf den Fahrrollen 31 lastend, ohne grossen Kraftaufwand und ohne zusätzliches, schweres Gerät wie beispielsweise Hubstapler, Portalkräne und dergleichen mehr, verschieben. Nach dem Verschieben können die Linearführungen 55 wieder mobilisiert und das Tragwerk 71 durch Betätigen der Spindeltriebe 45 wieder abgesenkt werden.

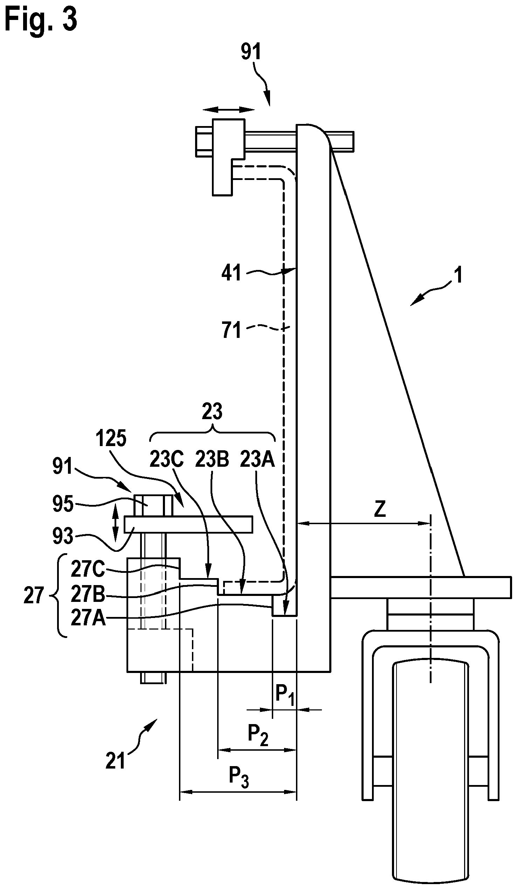

Die Figur 3 zeigt eine Seitenansicht einer Fahraufnahmevorrichtung 1 mit einem in der Lastaufnahme 21 abgestuft ausgestalteten Vorsprung 125 und mit Klemmvorrichtungen 91. Bis auf den abgestuften Vorsprung 125 und die Klemmvorrichtungen 91 entspricht diese Fahraufnahmevorrichtung 1 den in den Figuren 1 und 2 beschriebenen Fahraufnahmevorrichtung 1.

Der in der Lastaufnahme 21 abgestuft ausgebildete Vorsprung 125 hat den Vorteil, dass die Fahraufnahmevorrichtung 1 problemlos an unterschiedlich dimensionierten und ausgestalteten Tragwerken 71 angeordnet werden kann. Dadurch, dass der Vorsprung 125 abgestuft ausgebildet ist, wird die Aufnahmefläche 23 in mehrere Teilflächen 23A, 23B, 23C unterteilt. Ferner sind mehrere Gegenflächen 27A, 27B, 27C mit vordefinierten Abständen P₁, P₂, P₃ in Bezug auf die Anschlagfläche 41 vorhanden.

Wie beispielhaft gezeigt, kann die Fahraufnahmevorrichtung 1 auch eine Klemmvorrichtung 91 aufweisen, die im Bereich der Lastaufnahme 21 angeordnet ist und deren Klemmkraft im Wesentlichen gegen die Aufnahmefläche 23 wirkend, aufbringbar ist. Im vorliegenden Ausführungsbeispiel sind als Teile der Klemmvorrichtung 91 eine Klemmpratze 93, sowie eine Spannschraube 95 vorgesehen. Eine artgleiche Klemmvorrichtung 91 kann auch im Bereich der Anschlagfläche 41 angeordnet sein. Deren Klemmkraft wirkt gegen die Anschlagfläche 41. Selbstverständlich kann auch nur eine der beiden Klemmvorrichtungen 91 vorgesehen sein oder die Klemmvorrichtung 91 ein anderes Klemmprinzip, beispielsweise einen Kniehebel, aufweisen.

Obwohl die Figuren 1 bis 3 eine Fahraufnahmevorrichtung 1 mit einer einzigen Fahrrolle 31 zeigen, ist es offensichtlich, dass eine solche Fahraufnahmevorrichtung 1 auch zwei oder mehr Fahrrollen 31 aufweisen kann. Auch wenn ausschliesslich Fahraufnahmevorrichtungen 1 dargestellt sind, deren Lastaufnahme 21 am Untergurt 73 des Tragwerkes 71 angreifen, ist es auch möglich, dass die Fahraufnahmevorrichtung 1 so konzipiert ist, dass deren Lastaufnahme 21 den Obergurt 75 aufnimmt. Selbstverständlich können auch zwei übereinander angeordnete Lastaufnahmen 21 an der Fahraufnahmevorrichtung 1 angeordnet sein, die den Obergurt 75 und den Untergurt 73 aufnehmen, wobei je nach geometrischer Interaktion mit dem Tragwerk 71 eine der Fahraufnahmevorrichtungen 1 als Lastaufnahme 21 und die Andere als Anschlagfläche 41 wirkt. Zudem sind solche Fahraufnahmevorrichtungen 1 auch zum Transport von Tragwerken 71 von Fahrtreppen geeignet. Des Weiteren kann eine Klemmvorrichtung 91 auch in einem Lastaufnahmebereich 21 angeordnet werden, der keinen abgestuften Vorsprung 27 oder überhaupt keinen Vorsprung 27 aufweist.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Fahraufnahmevorrichtung (1), die zwecks Installationsarbeiten temporär an ein Tragwerk (71) oder einen Tragwerkabschnitt eines Fahrsteiges oder einer Fahrtreppe montierbar ist, wobei die Fahraufnahmevorrichtung (1) zumindest eine Fahrrolle (31) und eine Lastaufnahme (21) aufweist, **dadurch gekennzeichnet,**
• **dass** die Fahraufnahmevorrichtung (1) zudem eine Anschlagfläche (41) aufweist, welche in einer Bezugsebene (11) angeordnet ist;
• **dass** die Fahrrolle (31) zu einer der Anschlagfläche (41) abgewandten Seite hin und von der Anschlagfläche (41) beabstandet, angeordnet ist, wobei eine Drehachse (35) der Fahrrolle (31) in einer orthogonal zur Bezugsebene (11) sich erstreckenden Achsenebene (13) angeordnet ist; und
• **dass** die Lastaufnahme (21) von der die Anschlagfläche (41) enthaltenden Seite der Bezugsebene (11) ausgehend, sowie von der Fahrrolle (31) sich weg erstreckend, ausgebildet ist und die Lastaufnahme (21) zumindest eine Aufnahmefläche (23) aufweist, welche Aufnahmefläche (23) zur Abstützung von parallel zur Bezugsebene (11) und orthogonal zur Achsenebene (13) auf die Lastaufnahme (21) einwirkende Gewichtskräfte (F_{G}) vorgesehen ist.

2. Fahraufnahmevorrichtung (1) nach Anspruch 1, wobei die Lastaufnahme (21) zumindest ein der Aufnahmefläche (23) anschliessender Vorsprung (25, 125) aufweist, wobei der Vorsprung (25, 125) zur Abstützung von orthogonal zur Bezugsebene (11) auf die Lastaufnahme (21) einwirkende Kräfte vorgesehen ist.

3. Fahraufnahmevorrichtung (1) nach Anspruch 2, wobei der Vorsprung (25) eine Gegenfläche (27) aufweist, deren Abstand (P) zur Anschlagfläche (41) auf eine Breite oder Stärke eines in der Lastaufnahme aufzunehmendes Walzprofil oder auf eine Blechstärke einstellbar ist.

4. Fahraufnahmevorrichtung (1) nach Anspruch 2, wobei der Vorsprung (125) abgestuft ausgebildet ist, so dass durch diese Abstufung die Aufnahmefläche (23) in mehrere Teilflächen (23A, 23B, 23C) unterteilt ist und mehrere Gegenflächen (27A, 27B, 27C) mit vordefinierten Abständen (P₁, P₂, P₃) in Bezug auf die Anschlagfläche (41) vorhanden sind.

5. Fahraufnahmevorrichtung (1) nach Anspruch 2, wobei der Vorsprung (25) und die Aufnahmefläche (23) durch das Anbringen einer Schablone (99) an die jeweilige Lastaufnahme (21), diese an eine Kontur eines durch die Lastaufnahme (21) aufzunehmendes Formrohr angepasst oder anpassbar ist.

6. Fahraufnahmevorrichtung (1) nach einem der Ansprüche 1 bis 5, wobei diese eine Klemmvorrichtung (91) aufweist, die im Bereich der Lastaufnahme (21) angeordnet ist und deren Klemmkraft im Wesentlichen gegen die Aufnahmefläche (23) wirkend, aufbringbar ist.

7. Fahraufnahmevorrichtung (1) nach einem der Ansprüche 1 bis 6, wobei diese eine Klemmvorrichtung (91) aufweist, die im Bereich der Anschlagfläche (41) angeordnet ist und deren Klemmkraft im Wesentlichen gegen die Anschlagfläche (41) wirkend, aufbringbar ist.

8. Fahraufnahmevorrichtung (1) nach einem der Ansprüche 1 bis 7, wobei die Fahrrolle (31) mittels eines Schwenklagers (37) mit den übrigen Komponenten der Fahraufnahmevorrichtung(1) verbunden ist und wobei eine Schwenkachse (33) des Schwenklagers (37) orthogonal zur Achsenebene (13) und parallel zur Bezugsebene (11) angeordnet ist.

9. Fahraufnahmevorrichtung (1) nach einem der Ansprüche 1 bis 8, wobei diese eine Arretier-Vorrichtung (61) zur Arretierung der Drehbewegung der Fahrrolle (31) aufweist.

10. Fahraufnahmevorrichtung (1) nach einem der Ansprüche 1 bis 9, wobei die Fahrrolle (31) aus schlagdämpfendem Material gefertigt ist, oder eine Bandage oder einen Reifen aus schlagdämpfendem Material aufweist.

11. Fahraufnahmevorrichtung (1) nach einem der Ansprüche 1 bis 10, wobei diese einen Grundkörper (43) und eine Konsole (51) aufweist, wobei am Grundkörper (43) die mindestens eine Anschlagfläche (41) und die mindestens eine Lastaufnahme (21) ausgebildet sind und an der Konsole (51) die Fahrrolle (31) angeordnet ist.

12. Fahraufnahmevorrichtung (1) nach Anspruch 11, wobei die Konsole (51) mit dem Grundkörper (43) mittels einer blockierbaren Linearführung (55) verbunden ist.

13. Fahraufnahmevorrichtung (1) nach Anspruch 12, wobei zwischen der Konsole (51) und dem Grundkörper (43) ein Spindeltrieb (45) zum Einstellen des Verschiebeweges (S) der Linearführung vorhanden ist.

14. Fahrbare Einheit (101) aufweisend ein Tragwerk (71) oder ein Tragwerkabschnitt eines Fahrsteiges oder einer Fahrtreppe und weiter aufweisend mindestens zwei Fahraufnahmevorrichtungen (1) nach einem der Ansprüche 1 bis 13, wobei von zwei Fahraufnahmevorrichtungen (1) jeweils die Eine der Anderen gegenüberliegend an Seiten des Tragwerkes (71) angeordnet sind.

15. Verfahren zum Installieren eines Fahrsteiges oder einer Fahrtreppe mit einem Tragwerk (71) oder mehreren Tragwerkabschnitte, wobei das Tragwerk (71) oder die Tragwerkabschnitte in einem Bauwerk zumindest eine Strecke über einen Boden hinweg transportiert werden müssen, **dadurch gekennzeichnet, dass** vor dem Transport an das Tragwerk (71) oder an jeden Tragwerkabschnitt wenigstens zwei einzelne Fahraufnahmevorrichtungen (1) nach einem der Ansprüche 1 bis 13 montiert werden und nach dem Transport die Fahraufnahmevorrichtungen (1) wieder demontiert werden.
